# EUROPEAN PATENT APPLICATION

(11) **EP 4 811 463 A1**
(43) Date of publication of application: **23.09.2026**
(21) Application number: 24892939.0
(22) Date of filing: 26.08.2024
(51) Int. Cl.: H01M 4/66, H01M 10/0525, B32B 7/12

(54) **COMPOSITE CURRENT COLLECTOR, ELECTRODE SHEET, SECONDARY BATTERY, AND ELECTRIC DEVICE**

(30) Priority: 24.11.2023 CN 202311597372
(71) Applicant: Contemporary Amperex Technology Co., Limited, Ningde, Fujian 352100 (CN)
(72) Inventor: CAI, Qiguo, Ningde, Fujian 352100 (CN); HUANG, Qisen, Ningde, Fujian 352100 (CN); LIU, Xin, Ningde, Fujian 352100 (CN); LI, Cheng, Ningde, Fujian 352100 (CN); LI, Mingling, Ningde, Fujian 352100 (CN); LIU, Xianghui, Ningde, Fujian 352100 (CN)
(74) Representative: Gong, Jinping
(86) International application number: PCT/CN2024/114598
(87) International publication number: WO 2025/107779

(57) **Abstract**

A composite current collector, an electrode plate, a secondary battery, and an electric apparatus are provided. The composite current collector includes a first metal layer, a bonding layer, and a second metal layer. The bonding layer includes a first surface and a second surface disposed opposite each other; the first metal layer is located on the first surface; and the second metal layer is located on the second surface. In the composite current collector, by disposing the bonding layer between the first metal layer and the second metal layer, peel strength of the first metal layer and the second metal layer can be enhanced, reducing the risk of detachment of the metal layers during processing.

## Description

### CROSS-REFERENCE TO RELATED APPLICATIONS

This application claims priority to Chinese Patent Application No. 2023115973722, filed on November 24, 2023 and entitled "COMPOSITE CURRENT COLLECTOR, ELECTRODE PLATE, SECONDARY BATTERY, AND ELECTRIC APPARATUS", which is incorporated herein by reference in its entirety.

### TECHNICAL FIELD

This application relates to the field of secondary battery technology, in particular to a composite current collector, an electrode plate, a secondary battery, and an electric apparatus.

### BACKGROUND

The statements herein merely provide background information related to this application and do not necessarily constitute the prior art.

Compared to pure metal current collectors, composite current collectors usually have advantages such as thinner metal layers, smaller weight, and higher safety performance. However, in traditional composite current collectors, the peel strength of the metal layers is insufficient, easily leading to the issue of detachment of the metal layers during processing.

### SUMMARY

To achieve the above objective, a first aspect of this application provides a composite current collector. The composite current collector includes a first metal layer, a bonding layer, and a second metal layer. The bonding layer includes a first surface and a second surface disposed opposite each other; the first metal layer is located on the first surface; and the second metal layer is located on the second surface.

In the above composite current collector, by disposing a bonding layer between the first metal layer and the second metal layer, peel strength of the first metal layer and the second metal layer can be enhanced, reducing the risk of detachment of the metal layers during processing.

In some embodiments, a portion of the bonding layer is embedded in the first metal layer. The embedment of the bonding layer can enhance a bonding force between the first metal layer and the bonding layer, thereby further enhancing the peel strength of the first metal layer.

In some embodiments, a portion of the bonding layer is embedded in the second metal layer. The embedment of the bonding layer can enhance a bonding force between the second metal layer and the bonding layer, thereby further enhancing the peel strength of the second metal layer.

In some embodiments, a roughness of a surface of the first metal layer close to the bonding layer satisfies: 0.1 µm ≤ Ra1 ≤ 0.5 µm and/or 0.5 µm ≤ Rz1 ≤ 1 µm, where Ra1 represents an arithmetic mean roughness of the surface of the first metal layer close to the bonding layer, and Rz1 represents a maximum height roughness of the surface of the first metal layer close to the bonding layer. An appropriate roughness of the surface of the first metal layer close to the bonding layer is conducive to enhancing the bonding force between the first metal layer and the bonding layer.

In some embodiments, a roughness of a surface of the second metal layer close to the bonding layer satisfies: 0.1 µm ≤ Ra2 ≤ 0.5 µm and/or 0.5 µm ≤ Rz2 ≤ 1 µm, where Ra2 represents an arithmetic mean roughness of the surface of the second metal layer close to the bonding layer, and Rz2 represents a maximum height roughness of the surface of the second metal layer close to the bonding layer. An appropriate roughness of the surface of the second metal layer close to the bonding layer is conducive to enhancing the bonding force between the second metal layer and the bonding layer.

In some embodiments, a thickness of the first metal layer is 1 µm to 10 µm. The thickness of the first metal layer within this range enables the first metal layer to have a suitable volume and weight. Optionally, the thickness of the first metal layer is 1 µm to 6 µm.

In some embodiments, the first metal layer includes at least one of aluminum, aluminum alloy, copper, copper alloy, silver, silver alloy, nickel, nickel alloy, gold, gold alloy, chromium, and chromium alloy.

In some embodiments, a thickness of the second metal layer is 1 µm to 10 µm. The thickness of the second metal layer within this range enables the second metal layer to have a suitable volume and weight. Optionally, the thickness of the second metal layer is 1 µm to 6 µm.

In some embodiments, the second metal layer includes at least one of aluminum, aluminum alloy, copper, copper alloy, silver, silver alloy, nickel, nickel alloy, gold, gold alloy, chromium, and chromium alloy.

In some embodiments, the composite current collector further includes a flame-retardant layer, where the flame-retardant layer is located inside the bonding layer. The provision of the flame-retardant layer can improve the flame-retardant effect of the composite current collector, reducing the risk of combustion of the composite current collector.

In some embodiments, a thickness of the flame-retardant layer is 300 nm to 700 nm. The thickness of the flame-retardant layer within this range enables the composite current collector to have good tensile strength while providing good flame retardation.

In some embodiments, the flame-retardant layer includes flame-retardant particles. The flame-retardant particles include at least one of sodium fluoroaluminate, calcium fluoride, aluminum fluoride, sodium fluorosilicate, magnesium fluoride, lithium fluoride, zinc borate, phosphate ester, phosphite ester, phosphate, phosphite, polyphosphoramide flame retardant, phenolic resin, flame-retardant silicone rubber, and flame-retardant epoxy resin. Optionally, Dv50 of the flame-retardant particles is 100 nm to 300 nm.

In some embodiments, multiple flame-retardant layers are provided, and the multiple flame-retardant layers are spaced apart inside the bonding layer. The provision of the multiple spaced flame-retardant layers can further improve the flame-retardant effect of the composite current collector and further enhance the tensile strength of the composite current collector. Optionally, the multiple flame-retardant layers are arranged in parallel.

In some embodiments, a distance between adjacent flame-retardant layers is 300 nm to 700 nm. The distance between adjacent flame-retardant layers within this range allows the bonding layer between adjacent flame-retardant layers to have an appropriate thickness, which is conducive to maintaining a good bonding force between the flame-retardant layers and the bonding layer.

In some embodiments, a distance between a flame-retardant layer closest to the first metal layer and the first metal layer is 300 nm to 700 nm.

In some embodiments, a distance between a flame-retardant layer closest to the second metal layer and the second metal layer is 300 nm to 700 nm.

In some embodiments, a thickness of the bonding layer is 1 µm to 8 µm. The thickness of the bonding layer within this range can maintain a good bonding force between the first metal layer and the bonding layer and between the second metal layer and the bonding layer, thereby providing the composite current collector with an appropriate thickness while ensuring strong peel strength of the first metal layer and the second metal layer. Optionally, the thickness of the bonding layer is 1 µm to 4 µm.

In some embodiments, the bonding layer includes at least one of polyolefin, ethylene-vinyl acetate copolymer, ethylene-vinyl alcohol copolymer, polyurethane, epoxy resin, styrene-isoprene-styrene copolymer, styrene-butadiene-styrene copolymer, styrene-ethylene-butylene-styrene copolymer, styrene-ethylene-propylene-styrene copolymer, silicone rubber, phenolic resin, urea-formaldehyde resin, polyimide, polyamide, polyethylene terephthalate, polybutylene terephthalate, polyparaphenylene terephthalamide, polytetrafluoroethylene, polyvinylidene fluoride, polystyrene, polyvinyl chloride, acrylonitrile-butadiene-styrene copolymer, polyoxymethylene, and polycarbonate.

In some embodiments, the composite current collector further includes a passivation layer, and the passivation layer is located on a surface of the first metal layer and/or the second metal layer away from the bonding layer. The provision of the passivation layer can improve the corrosion resistance of the first metal layer and/or the second metal layer, which is conducive to maintaining a stable structure of the composite current collector. Additionally, the provision of the passivation layer can also enhance the tensile strength of the composite current collector.

In some embodiments, a thickness of the passivation layer is 10 nm to 2000 nm. The thickness of the passivation layer within this range enables the composite current collector to maintain an appropriate thickness while providing effective passivation. Optionally, the thickness of the passivation layer is 20 nm to 200 nm.

A second aspect of this application provides an electrode plate including the composite current collector.

A third aspect of this application provides a secondary battery including the electrode plate.

A fourth aspect of this application provides an electric apparatus including at least one of the composite current collector, the electrode plate, and the secondary battery.

### BRIEF DESCRIPTION OF DRAWINGS

To better describe and illustrate the embodiments or examples provided by this application, reference may be made to one or more drawings. The additional details or examples used to describe the drawings should not be considered as limiting the scope of any of the disclosed applications, the currently described embodiments or examples, or the best mode of these applications as currently understood. Moreover, identical reference signs denote identical components throughout all drawings. In the drawings:
FIG. 1 to FIG. 4 are respectively schematic structural diagrams of composite current collectors in different embodiments of this application.
FIG. 5 is a schematic diagram of a secondary battery according to an embodiment of this application.
FIG. 6 is an exploded view of the secondary battery according to an embodiment of this application shown in FIG. 1.
FIG. 7 is a schematic diagram of an electric apparatus using a secondary battery as a power source according to an embodiment of this application.

### Description of reference signs:

1. secondary battery; 11. shell; 12. electrode assembly; 13. cover plate; 2. electric apparatus; 3. composite current collector; 31. first metal layer; 32. bonding layer; 33. second metal layer; 34. flame-retardant layer; and 35. passivation layer.

### DESCRIPTION OF EMBODIMENTS

To facilitate understanding of this application, a more comprehensive description of this application is provided below with reference to the relevant drawings. Preferred embodiments of this application are provided in the drawings. However, this application may be implemented in many different forms and is not limited to the embodiments described herein. On the contrary, the purpose of providing these embodiments is to make the understanding of the disclosure of this application more thorough and comprehensive.

Unless otherwise defined, all technical and scientific terms used herein have the same meaning as commonly understood by those skilled in the technical field of this application. The terms used in the specification of this application are for the purpose of describing specific embodiments only and are not intended to limit this application. The term "and/or" used herein includes any and all combinations of one or more of the associated listed items.

The "range" disclosed in this application may be defined in the form of a lower limit and an upper limit, where a given range is defined by selecting a lower limit and an upper limit, and the selected lower limit and upper limit define the boundaries of a particular range. Ranges defined in this manner may include or exclude endpoints, where either endpoint may be independently included or excluded, and any combination may be made, that is, any lower limit may be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and if maximum range values of 3, 4, and 5 are listed, the following ranges are all contemplated: 1 to 3, 1 to 4, 1 to 5, 2 to 3, 2 to 4, and 2 to 5. In this application, unless otherwise specified, the numerical range "a to b" represents an abbreviated representation of a combination of any real numbers between a and b, where both a and b are real numbers. For example, the numerical range "0 to 5" means that all real numbers between "0 to 5" have been listed herein, and "0 to 5" is merely an abbreviated representation of a combination of these numbers. Additionally, when a parameter is expressed as an integer greater than or equal to 2, it is equivalent to listing that the parameter is, for example, an integer 2, 3, 4, 5, 6, 7, 8, 9, 10, 11, 12, or the like. For example, when a parameter is expressed as an integer selected from "2 to 10", it is equivalent to listing the integers 2, 3, 4, 5, 6, 7, 8, 9, and 10.

In this application, terms such as "multiple" and "various", unless specifically limited, refer to a quantity greater than 2 or equal to 2. For example, "one or more" indicates one, two, or more.

All embodiments and optional embodiments of this application may be combined with each other to form new technical solutions unless otherwise specified.

References to "embodiment" herein mean that a particular feature, structure, or characteristic described in connection with the embodiment may be included in at least one embodiment or implementation of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments. The term "implementation" mentioned herein has a similar understanding.

Those skilled in the art can understand that in the methods of various embodiments or examples, the order in which the steps are written does not imply a strict execution order that imposes any limitation on the implementation process; and the specific execution order of the steps should be determined by their functions and possible inherent logic. Unless otherwise specified, all steps of this application may be performed sequentially or randomly. For example, the method includes steps (a) and (b), indicating that the method may include steps (a) and (b) performed sequentially, or steps (b) and (a) performed sequentially. For example, if it is mentioned that the method may further include step (c), it means that step (c) may be added to the method in any order, for example, the method may include steps (a), (b), and (c), or steps (a), (c), and (b), or steps (c), (a), and (b), or the like.

In this application, unless otherwise specified, open-ended technical features or solutions described by words such as "contain", "include", or "comprise" do not exclude additional members beyond the listed members and may be regarded as providing both closed features or solutions including the listed members and open features or solutions including additional members beyond the listed members. For example, when A includes a1, a2, and a3, unless otherwise specified, A may include additional members or may not include additional members, which may be regarded as providing both the feature or solution "A includes a1, a2, and a3" and the feature or solution "A includes not only a1, a2, and a3 but also other members".

In this application, unless otherwise specified, A (such as B) indicates that B is a non-limiting example of A, and it can be understood that A is not limited to B.

In this application, "optionally", "optional", and "selectable" means that something may or may not be present, that is, it refers to either of two parallel options of "present" or "absent". If "selectable" appears in multiple places in a technical solution, unless otherwise specified and there is no contradiction or mutual constraint, each "selectable" is independent.

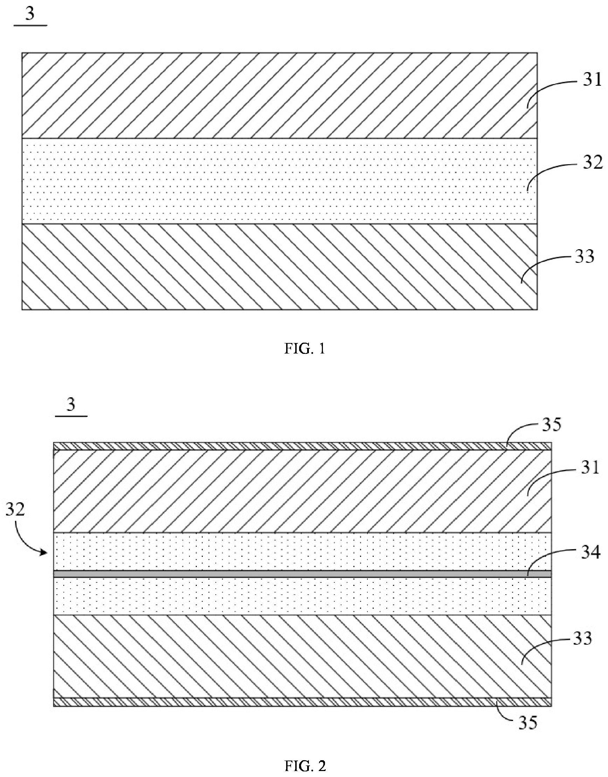

Referring to FIG. 1, an embodiment of this application provides a composite current collector 3. The composite current collector 3 includes a first metal layer 31, a bonding layer 32, and a second metal layer 33. The bonding layer 32 includes a first surface and a second surface disposed opposite each other, where the first metal layer 31 is located on the first surface, and the second metal layer 33 is located on the second surface. In the composite current collector 3 of this embodiment, by disposing the bonding layer 32 between the first metal layer 31 and the second metal layer 33, peel strength of the first metal layer 31 and the second metal layer 33 can be enhanced, reducing the risk of detachment of the metal layers during processing.

In some embodiments, a portion of the bonding layer is embedded in the first metal layer. In this case, the embedment of the bonding layer can enhance the bonding force between the first metal layer and the bonding layer, thereby further enhancing the peel strength of the first metal layer. It can be understood that a portion of the bonding layer being embedded in the first metal layer means that, at a contact position between the bonding layer and the first metal layer, a portion of the bonding layer is located within the first metal layer. For example, a surface of the first metal layer close to the bonding layer has an uneven structure, or the surface of the first metal layer close to the bonding layer has pores, or the like. In this case, a portion of the bonding layer is embedded in the uneven structure of the surface of the first metal layer close to the bonding layer, in the pores of the surface of the first metal layer close to the bonding layer, or the like, which can realize better bonding between the bonding layer and the first metal layer through mechanisms such as mechanical interlocking, thereby enhancing the peel strength of the first metal layer.

In some embodiments, a portion of the bonding layer is embedded in the second metal layer. In this case, the embedment of the bonding layer can enhance the bonding force between the second metal layer and the bonding layer, thereby further enhancing the peel strength of the second metal layer. It can be understood that a portion of the bonding layer being embedded in the second metal layer means that, at a contact position between the bonding layer and the second metal layer, a portion of the bonding layer is located within the second metal layer. For example, a surface of the second metal layer close to the bonding layer has an uneven structure, or the surface of the second metal layer close to the bonding layer has pores, or the like. In this case, a portion of the bonding layer is embedded in the uneven structure of the surface of the second metal layer close to the bonding layer, in the pores of the surface of the second metal layer close to the bonding layer, which can realize better bonding between the bonding layer and the second metal layer through mechanisms such as mechanical interlocking, thereby enhancing the peel strength of the second metal layer.

In some embodiments, a roughness of a surface of the first metal layer close to the bonding layer satisfies: 0.1 µm ≤ Ra1 ≤ 0.5 µm and/or 0.5 µm ≤ Rz1 ≤ 1 µm, where Ra1 represents an arithmetic mean roughness of the surface of the first metal layer close to the bonding layer, and Rz1 represents a maximum height roughness of the surface of the first metal layer close to the bonding layer. In this case, an appropriate roughness of the surface of the first metal layer close to the bonding layer is conducive to enhancing the bonding force between the first metal layer and the bonding layer. Optionally, the roughness of the surface of the first metal layer close to the bonding layer can be adjusted by processing the surface of the first metal layer close to the bonding layer using methods such as plasma spraying, spraying, or mechanical friction, to make the roughness of the surface satisfy 0.1 µm ≤ Ra1 ≤ 0.5 µm and/or 0.5 µm ≤ Rz1 ≤ 1 µm. Further optionally, Ra1 may be 0.1 µm, 0.15 µm, 0.2 µm, 0.25 µm, 0.3 µm, 0.35 µm, 0.4 µm, 0.45 µm, 0.5 µm, or the like. Still further optionally, Rz1 may be 0.5 µm, 0.55 µm, 0.6 µm, 0.65 µm, 0.7 µm, 0.75 µm, 0.8 µm, 0.85 µm, 0.9 µm, 0.95 µm, 1 µm, or the like.

In some embodiments, a roughness of a surface of the second metal layer close to the bonding layer satisfies: 0.1 µm ≤ Ra2 ≤ 0.5 µm and/or 0.5 µm ≤ Rz2 ≤ 1 µm, where Ra2 represents an arithmetic mean roughness of the surface of the second metal layer close to the bonding layer, and Rz2 represents a maximum height roughness of the surface of the second metal layer close to the bonding layer. In this case, an appropriate roughness of the surface of the second metal layer close to the bonding layer is conducive to enhancing the bonding force between the second metal layer and the bonding layer. Optionally, the roughness of the surface of the second metal layer close to the bonding layer can be adjusted by processing the surface of the second metal layer close to the bonding layer using methods such as plasma spraying, spraying, or mechanical friction, to make the roughness of the surface satisfy 0.1 µm ≤ Ra2 ≤ 0.5 µm and/or 0.5 µm ≤ Rz2 ≤ 1 µm. Further optionally, Ra2 may be 0.1 µm, 0.15 µm, 0.2 µm, 0.25 µm, 0.3 µm, 0.35 µm, 0.4 µm, 0.45 µm, 0.5 µm, or the like. Still further optionally, Rz2 may be 0.5 µm, 0.55 µm, 0.6 µm, 0.65 µm, 0.7 µm, 0.75 µm, 0.8 µm, 0.85 µm, 0.9 µm, 0.95 µm, 1 µm, or the like.

In some embodiments, a thickness of the first metal layer is 1 µm to 10 µm. The thickness of the first metal layer within this range enables the first metal layer to have a suitable volume and weight. Applying the composite current collector to a secondary battery can maintain a suitable energy density for the battery. Optionally, the thickness of the first metal layer may be 1 µm, 2 µm, 3 µm, 4 µm, 5 µm, 6 µm, 7 µm, 8 µm, 9 µm, 10 µm, or the like. Further optionally, the thickness of the first metal layer may be 1 µm to 6 µm.

Further, as some examples of material selection for the first metal layer, the first metal layer includes at least one of aluminum, aluminum alloy, copper, copper alloy, silver, silver alloy, nickel, nickel alloy, gold, gold alloy, chromium, and chromium alloy.

In some embodiments, a thickness of the second metal layer is 1 µm to 10 µm. The thickness of the second metal layer within this range enables the second metal layer to have a suitable volume and weight. Applying the composite current collector to a secondary battery can maintain a suitable energy density for the battery. Optionally, the thickness of the second metal layer may be 1 µm, 2 µm, 3 µm, 4 µm, 5 µm, 6 µm, 7 µm, 8 µm, 9 µm, 10 µm, or the like. Further optionally, the thickness of the second metal layer may be 1 µm to 6 µm.

Further, as some examples of material selection for the second metal layer, the second metal layer includes at least one of aluminum, aluminum alloy, copper, copper alloy, silver, silver alloy, nickel, nickel alloy, gold, gold alloy, chromium, and chromium alloy.

Referring to FIG. 2, the composite current collector 3 further includes a flame-retardant layer 34, where the flame-retardant layer 34 is located inside the bonding layer 32. The provision of the flame-retardant layer can improve the flame-retardant effect of the composite current collector, reducing the risk of combustion of the composite current collector. When the composite current collector is applied to a secondary battery, the provision of the flame-retardant layer can reduce the risk of combustion during thermal runaway of the battery. Further, the flame-retardant layer and the bonding layer can support each other, which is conducive to enhancing the tensile strength of the composite current collector.

In some embodiments, a thickness of the flame-retardant layer is 300 nanometers (nm) to 700 nm. The thickness of the flame-retardant layer within this range enables the composite current collector to have good tensile strength while providing good flame retardation. Optionally, the thickness of the flame-retardant layer may be 300 nm, 350 nm, 400 nm, 450 nm, 500 nm, 550 nm, 600 nm, 650 nm, 700 nm, or the like.

In some embodiments, the flame-retardant layer includes flame-retardant particles. The flame-retardant particles include at least one of sodium fluoroaluminate, calcium fluoride, aluminum fluoride, sodium fluorosilicate, magnesium fluoride, lithium fluoride, zinc borate, phosphate ester, phosphite ester, phosphate, phosphite, polyphosphoramide flame retardant, phenolic resin, flame-retardant silicone rubber, and flame-retardant epoxy resin. Optionally, Dv50 of the flame-retardant particles is less than or equal to a designed thickness of the flame-retardant layer.

It can be understood that, in this application, Dv50 refers to a particle size at which the cumulative particle size distribution reaches 50% in a volume-based cumulative distribution curve, physically meaning that particles smaller than (or larger than) this particle size account for 50%. As an example, Dv50 can be obtained from a particle size distribution curve measured using a laser diffraction particle size analyzer Mastersizer 3000 according to the GB/T 19077-2016 test method.

In some embodiments, the flame-retardant layer may be prepared by spraying a material containing flame-retardant particles.

In some embodiments, multiple flame-retardant layers are provided. The multiple flame-retardant layers are spaced apart inside the bonding layer. The provision of the multiple spaced flame-retardant layers can further improve the flame-retardant effect of the composite current collector and further enhance the tensile strength of the composite current collector. Optionally, the multiple flame-retardant layers are arranged in parallel.

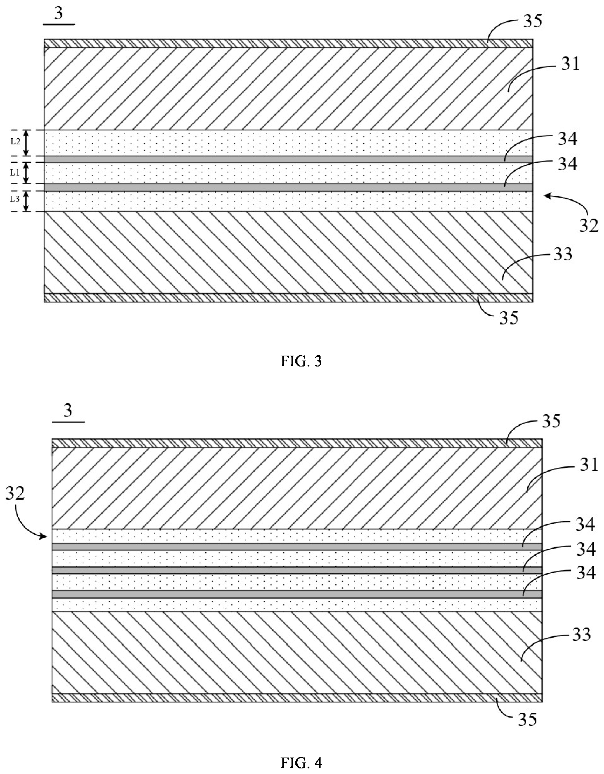

Referring to FIG. 3, in some embodiments, two flame-retardant layers 34 are provided. Both the two flame-retardant layers 34 are located inside the bonding layer 32, and the two flame-retardant layers 34 are arranged in parallel.

Referring to FIG. 4, in some other embodiments, three flame-retardant layers 34 are provided. All the three flame-retardant layers 34 are located inside the bonding layer 32, and the three flame-retardant layers 34 are arranged in parallel.

It can be understood that four, five, six, or more flame-retardant layers may be provided. In the structure of the composite current collector, the number of the flame-retardant layers can be set according to design requirements.

In some embodiments, a distance between adjacent flame-retardant layers is 300 nm to 700 nm. Still referring to FIG. 3, the distance between adjacent flame-retardant layers 34 is shown. The distance between adjacent flame-retardant layers 34 is L1, where L1 is 300 nm to 700 nm. The distance between adjacent flame-retardant layers within this range allows the bonding layer between adjacent flame-retardant layers to have an appropriate thickness, which is conducive to maintaining a good bonding force between the flame-retardant layers and the bonding layer. Optionally, the distance between adjacent flame-retardant layers may be 300 nm, 350 nm, 400 nm, 450 nm, 500 nm, 550 nm, 600 nm, 650 nm, 700 nm, or the like.

In some embodiments, a distance between the flame-retardant layer closest to the first metal layer and the first metal layer is 300 nm to 700 nm. Still referring to FIG. 3, the distance between the flame-retardant layer 34 closest to the first metal layer 31 and the first metal layer 31 is shown. The distance between the flame-retardant layer 34 closest to the first metal layer 31 and the first metal layer 31 is L2, where L2 is 300 nm to 700 nm. L2 being within this range can maintain a good bonding force between the first metal layer and the bonding layer and between the flame-retardant layer and the bonding layer. Optionally, the distance between the flame-retardant layer closest to the first metal layer and the first metal layer may be 300 nm, 350 nm, 400 nm, 450 nm, 500 nm, 550 nm, 600 nm, 650 nm, 700 nm, or the like.

In some embodiments, a distance between the flame-retardant layer closest to the second metal layer and the second metal layer is 300 nm to 700 nm. Still referring to FIG. 3, the distance between the flame-retardant layer 34 closest to the second metal layer 33 and the second metal layer 33 is shown. The distance between the flame-retardant layer 34 closest to the second metal layer 33 and the second metal layer 33 is L3, where L3 is 300 nm to 700 nm. L3 being within this range can maintain a good bonding force between the second metal layer and the bonding layer and between the flame-retardant layer and the bonding layer. Optionally, the distance between the flame-retardant layer closest to the second metal layer and the second metal layer may be 300 nm, 350 nm, 400 nm, 450 nm, 500 nm, 550 nm, 600 nm, 650 nm, 700 nm, or the like.

In some embodiments, a thickness of the bonding layer is 1 µm to 8 µm. The thickness of the bonding layer within this range can maintain a good bonding force between the first metal layer and the bonding layer and between the second metal layer and the bonding layer, thereby providing the composite current collector with an appropriate thickness while ensuring strong peel strength of the first metal layer and the second metal layer. Optionally, the thickness of the bonding layer may be 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, or the like. Further optionally, the thickness of the bonding layer is 1 µm to 4 µm. It can be understood that when the composite current collector includes a flame-retardant layer, the flame-retardant layer is located inside the bonding layer, and the thickness of the bonding layer includes a thickness of the flame-retardant layer.

In some embodiments, the bonding layer includes at least one of polyolefin, ethylene-vinyl acetate copolymer, ethylene-vinyl alcohol copolymer, polyurethane, epoxy resin, styrene-isoprene-styrene copolymer, styrene-butadiene-styrene copolymer, styrene-ethylene-butylene-styrene copolymer, styrene-ethylene-propylene-styrene copolymer, silicone rubber, phenolic resin, urea-formaldehyde resin, polyimide, polyamide, polyethylene terephthalate, polybutylene terephthalate, polyparaphenylene terephthalamide, polytetrafluoroethylene, polyvinylidene fluoride, polystyrene, polyvinyl chloride, acrylonitrile-butadiene-styrene copolymer, polyoxymethylene, and polycarbonate. Optionally, the polyolefin includes at least one of ethylene-propylene copolymer, polyethylene, polypropylene, and poly(ethylene-propylene).

It can be understood that the bonding layer may be prepared by coating. For example, a slurry including a bonding layer raw material may be applied on the first metal layer, followed by a curing process to prepare the bonding layer.

It can also be understood that when the composite current collector includes a flame-retardant layer, the bonding layer is divided into multiple sub-layers. In this case, each sub-layer may be obtained by applying a slurry on the flame-retardant layer, to prepare the bonding layer.

Still referring to FIG. 2 to FIG. 4, in some embodiments, the composite current collector 3 further includes a passivation layer 35. The passivation layer 35 is located on a surface of the first metal layer 31 and/or the second metal layer 33 away from the bonding layer 32. The provision of the passivation layer can improve the corrosion resistance of the first metal layer and/or the second metal layer, which is conducive to maintaining a stable structure of the composite current collector. Additionally, the provision of the passivation layer can also enhance the tensile strength of the composite current collector. Furthermore, the provision of the passivation layer can reduce the risk of adhesion during laser cutting of the composite current collector, thereby increasing a cutting speed of laser cutting.

It can be understood that, in the embodiments shown in FIG. 2 to FIG. 4, the passivation layer 35 is provided on both the surface of the first metal layer 31 away from the bonding layer 32 and the surface of the second metal layer 33 away from the bonding layer 32. As some other examples of the provision of the passivation layer 35, the passivation layer 35 may be provided on the surface of the first metal layer 31 away from the bonding layer 32, while no passivation layer 35 is provided on the surface of the second metal layer 33 away from the bonding layer 32. Alternatively, no passivation layer 35 is provided on the surface of the first metal layer 31 away from the bonding layer 32, while the passivation layer 35 is provided on the surface of the second metal layer 33 away from the bonding layer 32.

In some embodiments, a thickness of the passivation layer is 10 nm to 2000 nm. The thickness of the passivation layer within this range enables the composite current collector to maintain an appropriate thickness while providing good passivation. For example, the thickness of the passivation layer may be 10 nm, 50 nm, 100 nm, 200 nm, 300 nm, 400 nm, 500 nm, 800 nm, 1000 nm, 1500 nm, 2000 nm, or the like. Optionally, the thickness of the passivation layer is 20 nm to 200 nm.

In some embodiments, the passivation layer may be an oxide layer. Further, the passivation layer may be a colored oxide layer. The provision of a colored oxide layer enables the composite current collector to have a corresponding color.

Optionally, the passivation layer includes an oxide film layer containing one or more of aluminum-containing hydrate oxide, chromium-containing oxide, molybdenum-containing oxide, silicon-containing oxide, or phosphorus-containing oxide.

In some embodiments, the passivation layer may be obtained by chemical oxidation. For example, a product may be subjected to oxidation treatment in an oxidizing solution to obtain a passivation layer.

Optionally, a composition of the oxidizing solution, a temperature for the chemical oxidation, a time for the chemical oxidation, and a color of the resulting passivation layer are shown in Table 1. During the chemical oxidation treatment, conditions such as the oxidizing solution, the temperature for the chemical oxidation, and the time for the chemical oxidation can be selected according to Table 1. In Table 1, a content is measured in grams per liter (g/L), the temperature is measured in degrees Celsius (°C), the time is measured in minutes (min), and the thickness of the passivation layer is measured in nanometers (nm).

**Table 1**

| No. | Composition of oxidizing solution | Chemical oxidation conditions | | | Color of passivation layer | Thickness of passivation layer (nm) |
|---|---|---|---|---|---|---|
| | | Content (g/L) | Temperature (°C) | Time (min) | | |
| 1 | Sodium carbonate (Na₂CO₃) | 50-60 | 95-100 | 8-10 | Golden yellow | 20-200 |
| | Sodium chromate (Na₂CrO₄) | 15-12 | | | | |
| | Trisodium phosphate (Na₃PO₄) | 15-20 | | | | |
| 2 | Sodium hydroxide (NaOH) | 2-5 | 85-100 | 5-8 | Golden yellow | 20-200 |
| | Sodium carbonate (Na₂CO₃) | 50 | | | | |
| | Sodium chromate (Na₂CrO₄) | 15-25 | | | | |
| 3 | Sodium carbonate (Na₂CO₃) | 60 | 95 | 8-10 | Golden yellow | 20-200 |
| | Sodium chromate (Na₂CrO₄) | 20 | | | | |
| | Disodium hydrogen phosphate (Na₂HPO₄·12H₂O) | 2 | | | | |
| 4 | Potassium dichromate (K₂Cr₂O₇·2H₂O) | 2-4 | 50-60 | 10-15 | Brownish yellow to rainbow color | 20-200 |
| | Chromic anhydride (CrO₃) | 1-2 | | | | |
| | Sodium fluoride (NaF) | 0.1-1 | | | | |
| 5 | Sodium dichromate (Na₂Cr₂O₇·2H₂O) | 3-3.5 | Room temperature | 3 | Colorless to dark brown | 20-200 |
| | Chromic anhydride (CrO₃) | 2-4 | | | | |
| | Sodium fluoride (NaF) | 0.8 | | | | |
| 6 | Ammonium molybdate [(NH₄)₂MoO₄] | 10-20 | 90-100 | 1-5 | Black | 50-100 |
| | Ammonium chloride (NH₄Cl) | 15 | | | | |
| 7 | Chromic anhydride (CrO₃) | 3.5-4 | Room temperature | 1-3 | Colorless and transparent to dark brown | 20-200 |
| | Sodium dichromate (Na₂Cr₂O₇) | 3-3.5 | | | | |
| | Sodium fluoride (NaF) | 0.8 | | | | |
| 8 | Chromic anhydride (CrO₃) | 5-10 | Room temperature | 0.5-5 | Golden yellow to light brownish yellow | 20-200 |
| | Potassium ferricyanide [K₃Fe(CN)₆] | 2-5 | | | | |
| | Sodium fluoride (NaF) | 0.5-1.5 | | | | |
| | Boric acid (H₃BO₃) | 1-2 | | | | |
| | Nitric acid (HNO₃) | 2-5 | | | | |
| 9 | Phosphoric acid (H₃PO₄) | 50-60 | 30-36 | 3-6 | Colorless to light blue with reddish-green | 20-200 |
| | Chromic anhydride (CrO₃) | 20-25 | | | | |
| | Ammonium hydrogen fluoride (NH₄HF₂) | 3-3.5 | | | | |
| | Diammonium hydrogen phosphate [(NH₄)₂HPO₄] | 2-2.5 | | | | |
| | Boric acid (H₃BO₃) | 1-1.2 | | | | |
| 10 | Chromic anhydride (CrO₃) | 80-90 | Room temperature | 15-30 | Colorless | 20-50 |
| | Sodium chloride (NaCl) | 1-2 | | | | |
| | Sulfuric acid (H₂SO₄) | 20-30 | | | | |

An embodiment of this application further provides a preparation method of a composite current collector. The preparation method includes the following steps.

Apply a slurry between a first metal layer and a second metal layer to obtain a pre-finished composite current collector product. Perform a curing process on the pre-finished composite current collector product to form a bonding layer between the first metal layer and the second metal layer. Optionally, the curing process is performed at a temperature of 85°C for a time of 72 hours (h).

Optionally, before the curing process, the method further includes rolling the pre-finished composite current collector product. Gases inside the composite current collector can be expelled through rolling.

Another embodiment of this application provides an electrode plate. The electrode plate includes the foregoing composite current collector. It can be understood that the electrode plate may be a positive electrode plate or a negative electrode plate.

Another embodiment of this application provides a secondary battery. The secondary battery includes the foregoing electrode plate.

Another embodiment of this application provides an electric apparatus. The electric apparatus includes at least one of the foregoing composite current collector, the foregoing electrode plate, and the foregoing secondary battery.

The secondary battery and electric apparatus of this application are described below with appropriate reference to the drawings.

Typically, a secondary battery includes a positive electrode plate, a negative electrode plate, an electrolyte, and a separator. During charging and discharging of the battery, active ions intercalate and deintercalate back and forth between the positive electrode plate and the negative electrode plate. The electrolyte serves to conduct ions between the positive electrode plate and the negative electrode plate. The separator is disposed between the positive electrode plate and the negative electrode plate, primarily to prevent short-circuiting between the positive and negative electrodes while allowing ions to pass through.

### Positive electrode plate

The positive electrode plate includes a positive electrode current collector and a positive electrode film layer disposed on at least one surface of the positive electrode current collector, where the positive electrode film layer includes a positive electrode active material.

As a non-limiting example, the positive electrode current collector has two opposite surfaces in its thickness direction, and the positive electrode active material layer is disposed on either one or both of the two opposite surfaces of the positive electrode current collector.

In some embodiments, the positive electrode current collector may be a metal foil or a composite current collector. For example, as a metal foil, aluminum foil may be used. The composite current collector may be the composite current collector described above. The composite current collector may also include a polymer material substrate and a metal layer formed on at least one surface of the polymer material substrate. The composite current collector may be obtained by forming a metal material on a polymer material substrate. Non-limiting examples of the metal material in the positive electrode current collector may include one or more of aluminum, aluminum alloy, nickel, nickel alloy, titanium, titanium alloy, silver, and silver alloy. Non-limiting examples of the polymer material substrate in the positive electrode current collector may include one or more of substrates such as polypropylene (PP), polyethylene terephthalate (PET), polybutylene terephthalate (PBT), polystyrene (PS), and polyethylene (PE).

In some embodiments, the positive electrode active material may be a positive electrode active material well known in the art for batteries. As a non-limiting example, the positive electrode active material may include one or more of the following materials: lithium-containing phosphates with an olivine structure, lithium transition metal oxides, and their respective modified compounds. However, this application is not limited to these materials, and other conventional materials that can be used as positive electrode active materials for batteries may also be used. One of these positive electrode active materials may be used alone, or two or more of them may be used in combination. Examples of the lithium transition metal oxides may include, but are not limited to, one or more of lithium cobalt oxide (for example, LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Non-limiting examples of the lithium-containing phosphates with an olivine structure may include, but are not limited to, one or more of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Non-limiting examples of the lithium cobalt oxide may include LiCoO₂. Non-limiting examples of the lithium nickel oxide may include LiNiO₂. Non-limiting examples of the lithium manganese oxide may include LiMnO₂, LiMn₂O₄, and the like. Non-limiting examples of the lithium nickel cobalt manganese oxide may include LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), and the like. Non-limiting examples of the lithium nickel cobalt aluminum oxide may include LiNi_{0.8}Co_{0.15}Al_{0.05}O₂.

In some embodiments, the positive electrode active material layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode active material layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode plate may be prepared by the following method: the foregoing components for preparing the positive electrode plate, such as the positive electrode active material, conductive agent, binder, and any other components, are dispersed in a solvent to form a positive electrode slurry; and the positive electrode slurry is applied on at least one surface of the positive electrode current collector, followed by drying and cold pressing to obtain a positive electrode plate. In terms of type, the solvent may be selected from, but is not limited to, any of the solvents mentioned in the foregoing embodiments, such as N-methylpyrrolidone (NMP). The positive electrode slurry may be applied on a single surface of the positive electrode current collector or on two surfaces of the positive electrode current collector. The positive electrode slurry may be applied on a single surface of the positive electrode current collector or on two surfaces of the positive electrode current collector. A solid content of the positive electrode slurry may be 40 weight% (wt%) to 80wt%. A viscosity of the positive electrode slurry at room temperature may be adjusted to 5000 millipascal-second (mPa·s) to 25000 mPa·s. When the positive electrode slurry is applied, based on a weight measured after drying (excluding the weight of the solvent), a coating weight per unit area may be 15 milligrams per square centimeter (mg/cm²) to 35 mg/cm². A compacted density of the positive electrode plate may be 3.0 grams per cubic centimeter (g/cm³) to 3.6 g/cm³, optionally 3.3 g/cm³ to 3.5 g/cm³.

### Negative electrode plate

The negative electrode plate includes a negative electrode current collector and a negative electrode active material layer disposed on at least one surface of the negative electrode current collector, where the negative electrode active material layer includes a negative electrode active material.

As a non-limiting example, the negative electrode current collector has two opposite surfaces in its thickness direction, and the negative electrode active material layer is disposed on either one or both of the two opposite surfaces of the negative electrode current collector.

In some embodiments, the negative electrode current collector may be a metal foil or a composite current collector. For example, as a metal foil, copper foil may be used. The composite current collector may be the composite current collector described above. The composite current collector may also include a polymer material substrate and a metal layer formed on at least one surface of the polymer material substrate. The composite current collector may be obtained by forming a metal material on a polymer material substrate. Non-limiting examples of the metal material in the negative electrode current collector may include one or more of copper, copper alloy, nickel, nickel alloy, titanium, titanium alloy, silver, and silver alloy. Non-limiting examples of the polymer material substrate in the negative electrode current collector may include one or more of substrates such as polypropylene (PP), polyethylene terephthalate (PET), polybutylene terephthalate (PBT), polystyrene (PS), and polyethylene (PE).

In some embodiments, the negative electrode active material may be a negative electrode active material well known in the art for batteries. As a non-limiting example, the negative electrode active material may include one or more of the following materials: artificial graphite, natural graphite, soft carbon, hard carbon, silicon-based materials, tin-based materials, and lithium titanate. Silicon-based materials may include one or more of elemental silicon, silicon oxide compounds, silicon-carbon composites, silicon-nitrogen composites, and silicon alloys. Tin-based materials may include one or more of elemental tin, tin oxide compounds, and tin alloys. However, this application is not limited to these materials, and other conventional materials that can be used as negative electrode active materials for batteries may also be used. One of these negative electrode active materials may be used alone, or two or more of them may be used in combination.

In some embodiments, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may include one or more of superconducting carbon, acetylene black, carbon black, Ketjen black, carbon dots, carbon nanotubes, graphene, and carbon nanofibers.

In some embodiments, the negative electrode active material layer further optionally includes other additives, such as a thickener (for example, sodium carboxymethyl cellulose (CMC-Na)).

In some embodiments, the negative electrode plate may be prepared by the following method: the components for preparing the negative electrode plate, such as the negative electrode active material, conductive agent, binder, and any other components, are dispersed in a solvent (for example, deionized water as a non-limiting example) to form a negative electrode slurry; and the negative electrode slurry is applied on at least one surface of the negative electrode current collector, followed by processes such as drying and cold pressing to obtain a negative electrode plate. The negative electrode slurry may be applied on a single surface of the negative electrode current collector or on two surfaces of the negative electrode current collector. A solid content of the negative electrode slurry may be 40wt% to 60wt%. A viscosity of the negative electrode slurry at room temperature may be adjusted to 2000 mPa·s to 10000 mPa·s. When the negative electrode slurry is applied, based on a weight measured after drying (excluding the weight of the solvent), a coating weight per unit area may be 75 g/m² to 220 g/m². A compacted density of the negative electrode plate may be 1.0 g/cm³ to 1.8 g/cm³.

### Electrolyte

The electrolyte serves to conduct ions between the positive electrode plate and the negative electrode plate. The type of the electrolyte is not particularly limited in this application, which can be selected according to requirements. For example, the electrolyte may be in liquid state, gel state, or all-solid-state.

In some embodiments, the electrolyte is a liquid electrolyte. The liquid electrolyte includes an electrolytic salt and a solvent.

In some embodiments, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro(oxalato)phosphate (LiDFOP), and lithium tetrafluoro(oxalato)phosphate (LiTFOP).

In some embodiments, the solvent may include one or more of ethylene carbonate (EC, 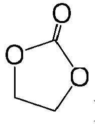 ), propylene carbonate (PC, 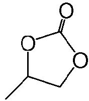 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 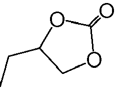 ), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive, and a positive electrode film-forming additive, and may further include an additive that can improve certain performance of the battery, such as an additive for improving overcharge performance of the battery, or an additive for improving high-temperature or low-temperature performance of the battery.

In some embodiments, the additive in the liquid electrolyte may include, but is not limited to, one or more of fluoroethylene carbonate (FEC), difluoroethylene carbonate (DFEC), and trifluoromethyl ethylene carbonate (TFPC).

### Separator

In some embodiments, the secondary battery further includes a separator. The type of the separator is not particularly limited in this application, and any well-known porous structure separator with good chemical stability and mechanical stability may be used.

In some embodiments, the material of the separator may include one or more of glass fibers, non-woven fabric, polyethylene, polypropylene, and polyvinylidene fluoride. The separator may be a single-layer film or a multilayer composite film, which is not particularly limited. When the separator is a multilayer composite film, the materials of the layers may be the same or different, which are not particularly limited.

In some embodiments, a thickness of the separator is 6 µm to 40 µm, optionally 12 µm to 20 µm.

In some embodiments, the positive electrode plate, negative electrode plate, and separator may be made into an electrode assembly through a winding process or a lamination process.

In some embodiments, the secondary battery may include an outer package. The outer package may be configured to encapsulate the electrode assembly and electrolyte.

In some embodiments, the outer package of the secondary battery may be a hard shell, such as a hard plastic shell, an aluminum shell, or a steel shell. The outer package of the secondary battery may alternatively be a soft pack, such as a pouch-type soft pack. The material of the soft pack may be plastic. Further, non-limiting examples of plastic may include one or more of polypropylene, polybutylene terephthalate, and polybutylene succinate.

The secondary battery includes at least one battery cell. The secondary battery may include one or more battery cells.

In this application, unless otherwise specified, a "battery cell" refers to a basic unit capable of realizing mutual conversion between chemical energy and electrical energy. Further, the battery cell typically includes at least a positive electrode plate, a negative electrode plate, and an electrolyte. During charging and discharging of the battery, active ions intercalate and deintercalate back and forth between the positive electrode plate and the negative electrode plate. The electrolyte serves to conduct active ions between the positive electrode plate and the negative electrode plate.

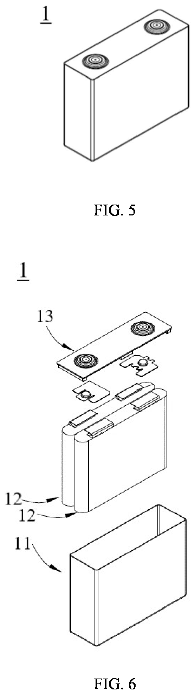

The battery cell is not limited to any particular shape in this application, and may be cylindrical, prismatic, or of any other shape. For example, FIG. 5 shows a battery cell 1 of a prismatic structure as an example.

In some embodiments, referring to FIG. 6, the outer package may include a shell 11 and a cover plate 13. The shell 11 may include a bottom plate and side plates connected to the bottom plate, with the bottom plate and side plates enclosing an accommodating cavity. The shell 11 has an opening communicating with the accommodating cavity, and the cover plate 13 can cover the opening to seal the accommodating cavity. The positive electrode plate, negative electrode plate, and separator can be made into an electrode assembly 12 through a winding process or a lamination process. The electrode assembly 12 is encapsulated in the accommodating cavity. The liquid electrolyte infiltrates the electrode assembly 12. The battery cell 1 may include one or more electrode assemblies 12, which can be selected by those skilled in the art according to actual needs.

The secondary battery may be a battery module or a battery pack.

The battery module includes at least one battery cell. The battery module may include one or more battery cells, and those skilled in the art can select an appropriate number according to the application and capacity of the battery module.

In the battery module, the multiple battery cells may be arranged sequentially along a length direction of the battery module. Certainly, the battery cells may be arranged in any other manner. Further, the multiple battery cells can be fixed by fasteners.

Optionally, the battery module may further include a housing with an accommodating space, and the multiple battery cells are accommodated in the accommodating space.

In some embodiments, the battery module may alternatively be assembled into a battery pack, the battery pack may include one or more battery modules, and those skilled in the art can select an appropriate number according to the application and capacity of the battery pack.

The battery pack may include a battery box and multiple battery modules disposed in the battery box. The battery box includes an upper box body and a lower box body, where the upper box body can cover the lower box body to form a closed space for accommodating the battery modules. The multiple battery modules may be arranged in any manner in the battery box.

Additionally, this application further provides an electric apparatus. The electric apparatus includes the secondary battery provided by this application. The secondary battery may be used as a power source for the electric apparatus or an energy storage unit for the electric apparatus. The electric apparatus may include, but is not limited to, a mobile device, an electric vehicle, an electric train, a ship, a satellite, and an energy storage system. The mobile device may be, for example, a mobile phone, a laptop, or the like. The electric vehicle may be, for example, a battery electric vehicle, a hybrid electric vehicle, a plug-in hybrid electric vehicle, an electric bicycle, an electric scooter, an electric golf cart, an electric truck, or the like, but is not limited thereto.

A secondary battery may be selected for an electric apparatus according to the usage requirements of the electric apparatus.

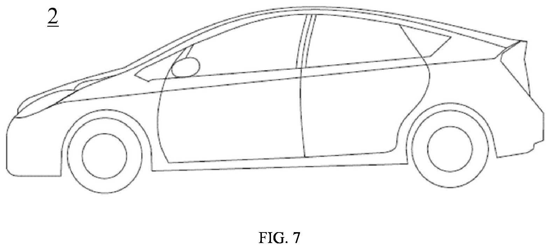

FIG. 7 shows an electric apparatus 2 as an example. The electric apparatus is a battery electric vehicle, a hybrid electric vehicle, a plug-in hybrid electric vehicle, or the like. To meet the high power and high energy density requirements of the electric apparatus on secondary batteries, a battery pack or battery module may be used.

As another example, the apparatus may be a mobile phone, a tablet computer, a laptop, or the like. Such apparatus is typically required to be light and thin and may use a secondary battery as a power source.

To make the technical problems solved, the technical solutions, and the beneficial effects of this application clearer, this application is further described in detail below with reference to embodiments and drawings. It is apparent that the described embodiments are only some rather than all embodiments of this application. The description of at least one exemplary embodiment is merely illustrative and in no way serves as any limitation on this application or the application thereof. Based on the embodiments in this application, all other embodiments obtained by those of ordinary skill in the art without creative efforts fall within the protection scope of this application.

Technologies or conditions not specified in the embodiments are carried out in accordance with the technologies or conditions described in the literature in the art or in accordance with product instructions. Reagents or instruments used without specifying the manufacturer are all conventional products commercially available.

### Example 1

A preparation method of a composite current collector in this example included the following steps.

S101: A bonding slurry was applied by gravure on one surface of a first aluminum foil. The bonding slurry was polyurethane.

S102: A second aluminum foil was attached to the bonding slurry.

S103: A product obtained in S102 was subjected to a rolling process.

S104: A product obtained in S103 was subjected to a curing process in an oven at a temperature of 85°C for a time of 72 h.

S105: The first aluminum foil and the second aluminum foil in a product obtained in S104 were thinned using a corrosive solution.

### Example 2

A preparation method of a composite current collector in this example included the following steps.

S101: A bonding slurry was applied by gravure on one surface of a first aluminum foil.

S102: Flame-retardant cryolite particles were sprayed on the bonding slurry.

S103: The bonding slurry was applied by gravure on the flame-retardant particles.

S104: A second aluminum foil was attached to the bonding slurry.

S105: A product obtained in S104 was subjected to a rolling process.

S106: A product obtained in S105 was subjected to a curing process in an oven at a temperature of 85°C for a time of 72 h.

S107: The first aluminum foil and the second aluminum foil in a product obtained in S106 were thinned using a corrosive solution.

### Example 3

A preparation method of a composite current collector in this example included the following steps.

S101: A bonding slurry was applied by gravure on one surface of a first aluminum foil.

S102: Flame-retardant cryolite particles were sprayed on the bonding slurry.

S103: The bonding slurry was applied by gravure on the flame-retardant particles.

S104: A second aluminum foil was attached to the bonding slurry.

S105: A product obtained in S104 was subjected to a rolling process.

S106: A product obtained in S105 was subjected to a curing process in an oven at a temperature of 85°C for a time of 72 h.

S107: The first aluminum foil and the second aluminum foil in a product obtained in S106 were thinned using a corrosive solution.

S108: A product obtained in S107 was subjected to chemical oxidation treatment using an oxidizing solution and chemical oxidation conditions corresponding to No. 6 in Table 1 to obtain a passivation layer.

### Example 4

A preparation method of a composite current collector in this example included the following steps.

S101: A bonding slurry was applied by gravure on one surface of a first aluminum foil.

S102: Flame-retardant cryolite particles were sprayed on the bonding slurry.

S103: The bonding slurry was applied by gravure on the flame-retardant particles.

S104: Flame-retardant cryolite particles were sprayed on the bonding slurry.

S105: The bonding slurry was applied by gravure on the flame-retardant particles.

S106: A second aluminum foil was attached to the bonding slurry.

S107: A product obtained in S106 was subjected to a rolling process.

S108: A product obtained in S107 was subjected to a curing process in an oven at a temperature of 85°C for a time of 72 h.

S109: The first aluminum foil and the second aluminum foil in a product obtained in S108 were thinned using a corrosive solution.

S110: A product obtained in S109 was subjected to chemical oxidation treatment using an oxidizing solution and chemical oxidation conditions corresponding to No. 6 in Table 1 to obtain a passivation layer.

### Example 5 and Example 6

Example 5 and Example 6 differed from Example 1 in that Ra1 and Rz1 of the first metal layer and Ra2 and Rz2 of the second metal layer were different.

### Example 7

This example differed from Example 3 in that both the first metal layer and the second metal layer were copper layers, and the oxidizing solution and chemical oxidation conditions were the oxidizing solution and chemical oxidation conditions corresponding to No. 10 in Table 1.

### Example 8

This example differed from Example 4 in that both the first metal layer and the second metal layer were copper layers, and the oxidizing solution and chemical oxidation conditions were the oxidizing solution and chemical oxidation conditions corresponding to No. 10 in Table 1.

### Example 9

This example differed from Example 7 in that the bonding layer did not contain a flame-retardant layer.

The parameters of the first metal layer, second metal layer, bonding layer, flame-retardant layer, passivation layer, and the like in Examples 1 to 9 are shown in Table 2.

### Comparative Example 1

A preparation method of a composite current collector in this comparative example included: an aluminum layer was provided on a surface of a PET substrate layer through vapor deposition.

### Comparative Example 2

A preparation method of a composite current collector in this comparative example included the following steps.

A copper seed layer was magnetron-sputtered on a surface of a PET substrate layer, and then a copper layer was electroplated on the copper seed layer. The product was then subjected to chemical oxidation treatment using the oxidizing solution and chemical oxidation conditions corresponding to No. 10 in Table 1 to obtain a passivation layer.

### Test example

(1) Peel strength difference test of metal layer: A sample was cut into 30 mm wide samples, a 3M double-sided tape was attached to a steel plate, and each sample was flatly attached to the double-sided tape. A special yellow tape (24 mm wide) was flatly attached to each sample, and a tensile machine was used to perform a 180° peel test at 50 mm/min to measure a bonding force which is required to be greater than or equal to 150 N/m. Bonding force=Sum of bonding forces of 10 test samples/10.
(2) Transmittance test: An LS117 transmittance meter was used to test the transmittance of the composite current collector according to the GB2410-80 standards. First, the instrument was started and self-calibrated until T=100% was displayed on an interface, which indicated qualified calibration. Subsequently, the composite current collector was clamped between a probe and a receiver, and a transmittance value of the composite current collector was automatically displayed on the interface. The test results are shown in Table 2.
(3) Tensile strength test: A tensile strength tester was used to test the tensile strength of the composite current collector according to the DIN53455-6-5 standards. A Japan ALGOL (1 kg) tensile test head was used, the composite current collector was installed between two test heads, and a maximum tensile stress applied when the composite current collector was fractured along a length direction was measured. The tensile strength of the composite current collector was calculated as a ratio of the maximum tensile stress applied when the composite current collector was fractured to a cross-sectional area of the composite current collector. The test results are shown in Table 2.
(4) Cutting performance test: A fiber laser of model YLP-V2-1-100-100-100 from IPG was used, with its power set to 100 watts (W) and its frequency set to 150 kilohertz (kHz). The composite current collector was installed on a cutting device of a laser for cutting, and a maximum cutting speed for the current collector was tested. The maximum cutting speed for the composite current collector refers to a maximum cutting speed achievable without adhesion during laser cutting of the composite current collector.
(5) Thickness test: A cross-sectional sample of the composite current collector was prepared through liquid nitrogen quenching or argon ion etching, and a secondary electron phase morphology of a cross section of the composite current collector was observed using a scanning electron microscope at a magnification (1000 to 30,000 times) to measure a thickness of each layer, with a minimum resolution reaching the nanometer level.
(6) Sheet resistance test:

A four-probe sheet resistance tester was used to test the sheet resistance of a large surface of the metal layer of the sample, with 30 random points tested, and an average sheet resistance of the 30 points was taken, which was measured in (mΩ/□).

**Table 2**

| | First metal layer | | | | Second metal layer | | | | Number of flame-retardant layers | | Bonding layer | Passivation layer | | Composite current collector | | | | | |
|---|---|---|---|---|---|---|---|---|---|---|---|---|---|---|---|---|---|---|---|
| | Material | Thickness | Ra 1 | Rz 1 | Material | Thickness | Ra 2 | Rz 2 | Number | Thickne ss of single flame-retardant layer | Thickness | Thickness | Color | Peel strength of first metal layer | Peel strength of second metal layer | Transmittance | Tensile strength | Maximum cutting speed | Sheet resistance |
| Example 1 | Alumin um | 1.17 | 0.4 | 0.8 | Alumin um | 1.11 | 0.4 | 0.9 | 0 | 0 | 1.75 | / | / | 347 | 361 | 41 | 161 | 30 | 30 |
| Example 2 | Alumin um | 122 | 0.4 | 0.9 | Alumin um | 1.15 | 0.4 | 0.8 | 1 | 332 | 2.22 | / | / | 336 | 343 | 24 | 176 | 28 | 29 |
| Example 3 | Alumin um | 1.16 | 0.3 | 0.7 | Alumin um | 1.02 | 0.3 | 0.7 | 1 | 329 | 2.27 | 83 | Black | 365 | 376 | 14 | 181 | 45 | 30 |
| Example 4 | Alumin um | 1.18 | 0.3 | 0.8 | Alumin um | 1.07 | 0.3 | 0.8 | 2 | 351 | 3.13 | 79 | Black | 357 | 364 | 10 | 198 | 40 | 30 |
| Example 5 | Aluminum | 1.17 | 0.0 8 | 0.4 | Aluminum | 1.11 | 0.0 8 | 0.4 | 0 | 345 | 1.75 | / | / | 327 | 319 | 41 | 162 | 30 | 28 |
| Example 6 | Aluminum | 1.13 | 0.7 | 1.4 | Aluminum | 1.16 | 0.8 | 1.5 | 0 | 338 | 1.75 | / | / | 392 | 388 | 41 | 141 | 30 | 41 |
| Example 7 | Copper | 2.02 | 0.3 | 0.7 | Copper | 2.11 | 0.3 | 0.7 | 1 | 352 | 2.31 | 20 | Colorless | 295 | 287 | 1 | 256 | 45 | 8 |
| Example 8 | Copper | 2.07 | 0.3 | 0.7 | Copper | 2.04 | 0.3 | 0.7 | 2 | 344 | 3.29 | 20 | Colorless | 276 | 274 | 1 | 271 | 30 | 8 |
| Example 9 | Copper | 2.02 | 0.3 | 0.7 | Copper | 2.09 | 0.3 | 0.7 | 0 | 355 | 1.73 | 20 | Colorle ss | 294 | 301 | 1 | 242 | 50 | 9 |
| Comparative Example 1 | Alumin um | 1.21 | 0.3 | 0.6 | Alumin um | 1.16 | 0.3 | 0.6 | 0 | / | / | / | / | 323 | 316 | 35 | 227 | 35 | 31 |
| Comparative Example 2 | Copper | 2.04 | 0.2 | 0.5 | Copper | 2.09 | 0.2 | 0.5 | 0 | / | / | 20 | Colorle ss | 155 | 161 | 1 | 199 | 45 | 10 |

In Table 2, the thicknesses of the first metal layer and the second metal layer are measured in µm. Ra1, Rz1, Ra2, and Rz2 are measured in µm. The thickness of a single flame-retardant layer is measured in nm. The thickness of the bonding layer is measured in µm. The thickness of the passivation layer is measured in nm. The peel strength is measured in N/m. The transmittance is measured in %. Thetensile strength is measured in MPa. The maximum cutting speed is measured in meters per minute (m/min). The sheet resistance is measured in milliohms per square (mΩ/□).

From Examples 1 to 6 and Comparative Example 1, it can be seen that when the metal layers are aluminum layers, the introduction of the bonding layer can enhance the peel strength of the first metal layer and the second metal layer.

From Examples 7 to 9 and Comparative Example 2, it can be seen that when the metal layers are copper layers, the introduction of the bonding layer can enhance the peel strength of the first metal layer and the second metal layer.

From Examples 2 to 4 and Example 1, it can be seen that when the bonding layer contains a flame-retardant layer, the tensile strength of the composite current collector can be enhanced.

From Example 1 and Example 5, it can be seen that when the surface roughness of the first metal layer and the second metal layer is relatively small, the peel strength of the first metal layer and the second metal layer may be reduced.

From Example 1 and Example 6, it can be seen that when the surface roughness of the first metal layer and the second metal layer is relatively large, the peel strength of the first metal layer and the second metal layer may be enhanced, but the tensile strength of the composite current collector may be reduced and the sheet resistance may be increased.

The various technical features of the above embodiments can be arbitrarily combined. To keep the description concise, not all possible combinations of the various technical features in the above embodiments are described. However, as long as there is no contradiction in the combinations of these technical features, they are all considered to fall within the scope described in this specification.

The above embodiments express only a few embodiments of this application, with relatively specific and detailed descriptions, but they are not to be construed as limiting the scope of the patent of the present invention. It should be noted that, for those of ordinary skill in the art, several variations and improvements can be made without departing from the concept of this application, all of which fall within the protection scope of this application. Therefore, the protection scope of the patent of this application is subject to the appended claims.

## Claims

1. A composite current collector, comprising a first metal layer, a bonding layer, and a second metal layer, wherein the bonding layer comprises a first surface and a second surface disposed opposite each other, the first metal layer is located on the first surface, and the second metal layer is located on the second surface.

2. The composite current collector according to claim 1, wherein a portion of the bonding layer is embedded in the first metal layer.

3. The composite current collector according to claim 1 or 2, wherein a portion of the bonding layer is embedded in the second metal layer.

4. The composite current collector according to any one of claims 1 to 3, wherein a roughness of a surface of the first metal layer close to the bonding layer satisfies: 0.1 µm ≤ Ra1 ≤ 0.5 µm, wherein Ra1 represents an arithmetic mean roughness of the surface of the first metal layer close to the bonding layer.

5. The composite current collector according to any one of claims 1 to 4, wherein a roughness of a surface of the first metal layer close to the bonding layer satisfies: 0.5 µm ≤ Rz1 ≤ 1 µm, wherein Rz1 represents a maximum height roughness of the surface of the first metal layer close to the bonding layer.

6. The composite current collector according to any one of claims 1 to 5, wherein a roughness of a surface of the second metal layer close to the bonding layer satisfies: 0.1 µm ≤ Ra2 ≤ 0.5 µm, wherein Ra2 represents an arithmetic mean roughness of the surface of the second metal layer close to the bonding layer.

7. The composite current collector according to any one of claims 1 to 6, wherein a roughness of a surface of the second metal layer close to the bonding layer satisfies: 0.5 µm ≤ Rz2 ≤ 1 µm, wherein Rz2 represents a maximum height roughness of the surface of the second metal layer close to the bonding layer.

8. The composite current collector according to any one of claims 1 to 7, wherein a thickness of the first metal layer is 1 µm to 10 µm.

9. The composite current collector according to any one of claims 1 to 8, wherein a thickness of the first metal layer is 1 µm to 6 µm.

10. The composite current collector according to any one of claims 1 to 9, wherein the first metal layer comprises at least one of aluminum, aluminum alloy, copper, copper alloy, silver, silver alloy, nickel, nickel alloy, gold, gold alloy, chromium, and chromium alloy.

11. The composite current collector according to any one of claims 1 to 10, wherein a thickness of the second metal layer is 1 µm to 10 µm.

12. The composite current collector according to any one of claims 1 to 11, wherein a thickness of the second metal layer is 1 µm to 6 µm.

13. The composite current collector according to any one of claims 1 to 12, wherein the second metal layer comprises at least one of aluminum, aluminum alloy, copper, copper alloy, silver, silver alloy, nickel, nickel alloy, gold, gold alloy, chromium, and chromium alloy.

14. The composite current collector according to any one of claims 1 to 13, wherein the composite current collector further comprises a flame-retardant layer, and the flame-retardant layer is located inside the bonding layer.

15. The composite current collector according to claim 14, wherein a thickness of the flame-retardant layer is 300 nm to 700 nm.

16. The composite current collector according to claim 14 or 15, wherein the flame-retardant layer comprises flame-retardant particles; the flame-retardant particles comprise at least one of sodium fluoroaluminate, calcium fluoride, aluminum fluoride, sodium fluorosilicate, magnesium fluoride, lithium fluoride, zinc borate, phosphate ester, phosphite ester, phosphate, phosphite, polyphosphoramide flame retardant, phenolic resin, flame-retardant silicone rubber, and flame-retardant epoxy resin.

17. The composite current collector according to claim 16, wherein Dv50 of the flame-retardant particles is 100 nm to 300 nm.

18. The composite current collector according to any one of claims 14 to 17, wherein multiple flame-retardant layers are provided, and the multiple flame-retardant layers are spaced apart inside the bonding layer.

19. The composite current collector according to claim 18, wherein the multiple flame-retardant layers are arranged in parallel.

20. The composite current collector according to claim 19, wherein a distance between adjacent flame-retardant layers is 300 nm to 700 nm.

21. The composite current collector according to claim 19 or 20, wherein a distance between a flame-retardant layer closest to the first metal layer and the first metal layer is 300 nm to 700 nm.

22. The composite current collector according to any one of claims 19 to 21, wherein a distance between a flame-retardant layer closest to the second metal layer and the second metal layer is 300 nm to 700 nm.

23. The composite current collector according to any one of claims 1 to 22, wherein a thickness of the bonding layer is 1 µm to 8 µm.

24. The composite current collector according to any one of claims 1 to 23, wherein a thickness of the bonding layer is 1 µm to 4 µm.

25. The composite current collector according to any one of claims 1 to 24, wherein the bonding layer comprises at least one of polyolefin, ethylene-vinyl acetate copolymer, ethylene-vinyl alcohol copolymer, polyurethane, epoxy resin, styrene-isoprene-styrene copolymer, styrene-butadiene-styrene copolymer, styrene-ethylene-butylene-styrene copolymer, styrene-ethylene-propylene-styrene copolymer, silicone rubber, phenolic resin, urea-formaldehyde resin, polyimide, polyamide, polyethylene terephthalate, polybutylene terephthalate, polyparaphenylene terephthalamide, polytetrafluoroethylene, polyvinylidene fluoride, polystyrene, polyvinyl chloride, acrylonitrile-butadiene-styrene copolymer, polyoxymethylene, and polycarbonate.

26. The composite current collector according to any one of claims 1 to 25, wherein the composite current collector further comprises a passivation layer, and the passivation layer is located on a surface of the first metal layer and/or the second metal layer away from the bonding layer.

27. The composite current collector according to claim 26, wherein a thickness of the passivation layer is 10 nm to 2000 nm.

28. The composite current collector according to claim 26 or 27, wherein a thickness of the passivation layer is 20 nm to 200 nm.

29. An electrode plate, comprising the composite current collector according to any one of claims 1 to 28.

30. A secondary battery, comprising the electrode plate according to claim 29.

31. An electric apparatus, comprising at least one of the composite current collector according to any one of claims 1 to 28, the electrode plate according to claim 29, and the secondary battery according to claim 30.
